# EUROPÄISCHE PATENTSCHRIFT

(11) **EP 3 129 861 B1**
(45) Veröffentlichungstag und Bekanntmachung des Hinweises auf die Patenterteilung: **17.07.2019**
(21) Anmeldenummer: 15714780.2
(22) Anmeldetag: 27.03.2015
(51) Int. Cl.: G06F 3/01, G06F 3/03, G02B 27/00

(54) **BESTIMMUNG DER POSE EINER DATENBRILLE IM FAHRZEUG**
DETERMINING THE POSE OF A HEAD-MOUNTED DISPLAY WITHIN A VEHICLE
DÉTERMINATION DE LA POSE D'UN AFFICHAGE TÊTE DANS UN VÉHICULE

(30) Priorität: 07.04.2014 DE 102014206625
(43) Veröffentlichungstag der Anmeldung: 15.02.2017
(73) Patentinhaber: Bayerische Motoren Werke Aktiengesellschaft, 80809 München (DE)
(72) Erfinder: KAUFMANN, Matthias Roland, 85716 Unterschleißheim (DE); SPIEßL, Wolfgang, 85276 Pfaffenhofen (DE)
(86) Internationale Anmeldenummer: PCT/EP2015/056699
(87) Internationale Veröffentlichungsnummer: WO 2015/155030

(56) Entgegenhaltungen:
- EP-A2- 2 254 023
- WO-A1-00/52563
- WO-A1-2005/124429

## Beschreibung

Die Erfindung betrifft im Wesentlichen eine Auswerteeinheit zur Bestimmung der Pose einer Datenbrille.

Heutzutage sind Datenbrillen bekannt, mit deren Hilfe dem Träger der Datenbrille Informationen angezeigt werden können. Die Datenbrille wird dabei wie eine gewöhnliche Brille, die als Sehhilfe verwendet wird, auf dem Kopf getragen. Gegenüber einer gewöhnlichen Brille umfasst die Datenbrille jedoch eine Anzeige, die beim Tragen der Datenbrille nahe dem oder den Augen des Benutzers angeordnet ist. Die Anzeige kann dabei zwei Teilanzeigen umfassen, eine für jedes Auge. Auf der Anzeige können dem Benutzer Informationen in Form von Text, graphischen Darstellungen oder Mischungen davon angezeigt werden. Die Anzeige kann insbesondere teildurchlässig sein, also so ausgestaltet sein, dass der Träger auch die Umgebung hinter der Anzeige erkennen kann. Besonders bevorzugt werden dem Träger die Informationen kontaktanalog angezeigt, was manchmal auch als augmented reality bezeichnet wird. Dabei wird dem Träger der Datenbrille die Information an einem Ort angezeigt, der an dem Ort eines Objektes in der Umgebung orientiert ist, also beispielsweise an das Objekt angrenzend oder dieses überlagernd. Zur Realisierung der Kontaktanalogie, muss typischerweise die Position des Objektes in der Umgebung und die Pose der Datenbrille in Relation zum Objekt bekannt sein, also die Position der Datenbrille und die Ausrichtung der Datenbrille.

Es sind Datenbrillen bekannt geworden, die ebenfalls jeweils eine Kamera umfassen, die Aufnahmen in Blickrichtung des Trägers der Datenbrille macht, siehe beispielsweise WO 2013/012914.

Dokument WO 00/52563 offenbart ein Kopfverfolgungssystem mit einer an einem Helm angebrachten Kamera für Cockpits. Im Cockpit sind mehrere Marker befestigt, die von der Kamera aufgenommen werden. Mithilfe einer Auswertung der Aufnahmen wird die Ausrichtung des Helms bestimmt.

Dokument WO 2005/124429 A1 offenbart eine interaktives Verfahren zum Repräsentieren von Information in einem Bild. Dokument EP 2 254 023 A2 offenbart ein System zum Ausrichten von Bildern an externen Markern in augennahmen Anzeigensystemen.

Datenbrillen können auch in Fahrzeugen genutzt werden, um kontaktanaloge Informationen anzuzeigen. Diese Informationen können andere Verkehrsteilnehmer oder Objekte im Fahrzeug betreffen. Um kontaktanaloge Informationen anzeigen zu können, muss in den meisten Fällen auch hier die Pose der Datenbrille bekannt sein.

Es ist eine Aufgabe der vorliegenden Erfindung, eine Auswerteeinheit bereitzustellen, mit dem die Pose der Datenbrille bestimmt werden kann und darauf aufbauend auf kontaktanaloge Weise Informationen angezeigt werden können.

Die Aufgabe der Erfindung wird durch die Gegenstände der unabhängigen Ansprüche gelöst. Vorteilhafte Weiterbildungen sind in den abhängigen Ansprüchen definiert.

Ein Aspekt betrifft eine Auswerteeinheit zur Bestimmung der Pose einer Datenbrille, wobei die Datenbrille eine erste Anzeige und eine Kamera umfasst; wobei die Auswerteeinheit eingerichtet ist zum: Empfangen von Aufnahmen der Kamera der Datenbrille; Erkennen eines vordefinierten Konfigurationsbildes in einer oder mehreren der Aufnahmen, wobei das Konfigurationsbild von einer zweiten Anzeige angezeigt wird; Bestimmen der Pose der Datenbrille mithilfe des erkannten Konfigurationsbildes; wobei die zweite Anzeige derart angesteuert wird, dass sie das Konfigurationsbild für einen Menschen nicht wahrnehmbar anzeigt, insbesondere für einen Zeitraum kleiner als 20 ms. Ferner kann das die Auswerteeinheit zum Erkennen der zweiten Anzeige in den Aufnahmen der Kamera eingerichtet sein. Die Ausrichtung und Position der Anzeige und damit des angezeigten Konfigurationsbildes sind typischerweise vordefiniert bzw. bekannt oder werden bereitgestellt. Die Bestimmung der Pose kann insbesondere relativ zur Ausrichtung und Position der zweiten Anzeige vorgenommen werden. Die Pose der Datenbrille kann die Ausrichtung der Datenbrille in einem dreidimensionalen Raum und die Position der Datenbrille in einem dreidimensionalen Raum beschreiben.

Es wird eine Bestimmung der Pose der Datenbrille aufbauend auf der oder den Aufnahmen der Kamera der Datenbrille vorgeschlagen. Um die Posenbestimmung zu erleichtern wird auf einer Anzeige ein vordefiniertes Konfigurationsbild angezeigt, das sich zur Bestimmung der Pose der Datenbrille eignet, also insbesondere klar begrenzte und ausreichend kontrastierte geometrische Formen darstellt. Mithilfe der oder den Aufnahme des Konfigurationsbildes, dem Wissen um das eigentliche Konfigurationsbild und der Position und Ausrichtung der zweiten Anzeige, kann auf die Pose der Datenbrille rückgeschlossen werden. Verfahren hierzu sind im Stand der Technik bekannt. Das Konfigurationsbild wird auf der Anzeige allerdings derart angezeigt, dass es für einen Menschen nicht wahrnehmbar ist. Dies kann insbesondere dadurch erreicht werden, dass das Konfigurationsbild für einen ausreichend kurzen Zeitraum angezeigt wird, beispielsweise weniger als 20 ms. Die Kamera der Datenbrille kann dennoch von dem Konfigurationsbild eine oder mehrere Aufnahme machen, abhängig von der Bildrate der Kamera. Hierin wird unter einer Nicht-Wahrnehmbarkeit verstanden, dass ein Mensch mit bloßem Auge das Konfigurationsbild nicht erkennt.

Die zweite Anzeige dient typischerweise einem anderen Zweck, nämlich dazu für den Menschen wahrnehmbare text- oder grafikbasierte Informationen anzuzeigen. In einer typischen Anwendung ist die zweite Anzeige an einem Armaturenbrett eines Fahrzeugs verbaut, die im Rahmen eines Anzeige-Bedien-Konzept dazu dient, den Fahrer des Fahrzeugs (oder den Beifahrer) Auswahlmenüs, Landkarten, Navigationshinweise, oder beispielsweise illustrierende Grafiken oder Bilder anzuzeigen. Alternativ kann die Anzeige auch ein sogenanntes Kombiinstrument, das typischerweise die Geschwindigkeit des Fahrzeugs anzeigt, sein. Die im Rahmen dieses Anzeige-Bedien-Konzeptes vorgesehenen Darstellungen eigenen sich wenig zur Aufnahme und Bestimmung der Pose einer Datenbrille. Die typischen Darstellungen sind veränderlich und umfassen häufig keine klar begrenzten geometrischen Formen. Gemäß der hier vorgeschlagenen Ansteuereinheit wird kurzzeitig ein Konfigurationsbild auf der Anzeige dargestellt, beispielsweise wird ein Frame eines Videostreams durch das Konfigurationsbild ersetzt. Das Konfigurationsbild unterscheidet sich damit von den ansonsten angezeigten Darstellungen, die Teil eines Anzeige-Bedien-Konzeptes sind. Für den Menschen ist die kurzzeitige Anzeige für die Dauer eines Frames in einem Videostream eines Bildes nicht wahrnehmbar. Allerdings können Videokameras das so angezeigte Konfigurationsbild aufnehmen. Das Konfigurationsbild ist vordefiniert und wird der Auswerteeinheit bereitgestellt bzw. ist für diese abrufbar gespeichert. Diese Aufnahme dient dann der Posenbestimmung der Datenbrille.

Die Auswerteeinheit kann in Hardware oder Software oder einer Kombination davon realisiert sein und auch in einer Datenbrille oder einem Fahrzeug umfasst sein.

In einer vorteilhaften Implementierung wird die zweite Anzeige derart angesteuert, dass sie das Konfigurationsbild mehrfach nacheinander anzeigt, wobei sowohl die Gesamtheit der angezeigten Konfigurationsbilder als auch die Anzeige jedes einzelnen des Konfigurationsbildes für einen Menschen nicht wahrnehmbar ist. Das heißt, dass zwischen aufeinanderfolgenden Anzeigen des Konfigurationsbildes Darstellungen angezeigt werden, die dem für die zweite Anzeige ansonsten vorgesehenen Anzeige-Bedien-Konzeptes dienen. Durch die wiederholte kurzzeitige Anzeige des Konfigurationsbildes kann eine fortlaufende Posenbestimmung ermöglicht werden. Darüber hinaus kann die fortlaufende Anzeige des Konfigurationsbildes sicherstellen, dass die Kamera der Datenbrille zu einem Zeitpunkt Aufnahmen macht, zu dem das Konfigurationsbild angezeigt wird. Beispielsweise können die Zeitpunkte, zu denen das Konfigurationsbild angezeigt wird, unregelmäßig gewählt sein, also nicht immer um die gleiche Zeitspanne nacheinander. So kann beispielsweise vorgesehen sein, das Konfigurationsbild im sich wiederholenden unregelmäßigen Zeitraster 1s; 2,1s; 1,4s; 2,2s anzuzeigen. In einigen Implementierungen kann vorgesehen sein, nicht immer dasselbe Konfigurationsbild anzuzeigen sondern zwischen verschiedenen Konfigurationsbildern zu wechseln. Hierdurch kann die Wahrnehmbarkeit für den Menschen weiter reduziert werden und auch die Anzeige von Konfigurationsbildern auch dann nicht wahrnehmbar bleiben, wenn mit bloßem Auge gezielt danach gesucht wird.

In einer vorteilhaften Ausführungsform ist die Auswerteeinheit ferner eingerichtet zum: Bereitstellen eines Hinweises auf den Zeitpunkt, wann das Konfigurationsbild auf der zweiten Anzeige angezeigt wird. Auf diese Weise kann der Rechenaufwand der Auswerteeinheit reduziert werden, diejenige oder diejenigen Aufnahmen der Kamera der Datenbrille aus allen Aufnahmen zu identifizieren, auf denen das Konfigurationsbild aufgenommen wurde. Somit kann auch der Energieverbrauch der Auswerteeinheit reduziert werden, was die Batterielaufzeit verlängern kann, sofern die Auswerteeinheit in einer mobilen Vorrichtung umfasst ist. Die Auswerteeinheit kann mit dem bereitgestellten Hinweis auf den bzw. die Anzeigenzeitpunkte gezielt nach einer oder mehreren Aufnahmen der Kamera suchen, die zu den Anzeigenzeitpunkten gemacht wurden. Der Hinweis kann sich aufgrund eines vordefinierten Zeitschemas ergeben oder auch von einer Anzeigen-Steuereinheit empfangen werden.

In einer Weiterbildung wird das Konfigurationsbild nur dann auf der zweiten Anzeige angezeigt, wenn mit einem Blickrichtungserfassungssystem festgestellt wird, dass der Träger der Datenbrille nicht auf die zweite Anzeige blickt. Es bestehen Überlegungen insbesondere in Fahrzeugen Blickerfassungssysteme zu verbauen, die die Augen (insbesondere die Iris) des Fahrers verfolgen und eruieren, in welche Richtung der Fahrer blickt. Blickerfassungssysteme an sich sind im Stand der Technik bekannt. Hierin wird also vorgeschlagen, das Konfigurationsbild nur dann anzuzeigen, wenn der Fahrer nicht auf die zweite Anzeige blickt. Obwohl die Anzeige des Konfigurationsbildes bereits so gestaltet ist, dass sie für einen Menschen nicht wahrnehmbar ist, kann so die Information, wohin der Fahrer blickt, eingesetzt werden und Wahrnehmungen an den Rändern des Sichtfeldes (mit deren Hilfe ggf. auch nur 20 ms lang angezeigte Bilder erkennen können) vermieden werden. Gegebenenfalls kann alternativ vorgesehen sein, das Konfigurationsbild im Fall der Blickabwendung (Benutzer blickt nicht auf die Anzeige) das Konfigurationsbild wahrnehmbar (beispielsweise länger als 20 ms) anzuzeigen, um eine verbesserte Posenbestimmung zu ermöglichen. Bei einer längeren Anzeige des Konfigurationsbildes können ggf. mehr Aufnahmen als bei einer nicht wahrnehmbaren Anzeige gemacht werden, was die Genauigkeit der Posenbestimmung steigern kann.

In einem weiteren Aspekt umfasst eine Vorrichtung zum kontaktanalogen Anzeigen von Darstellungen: eine Datenbrille mit einer ersten Anzeige und einer Kamera; Eine oben dargestellte Auswerteeinheit; Wobei die Vorrichtung eingerichtet ist zum: Anzeigen einer Darstellung auf kontaktanaloge Weise unter Verwendung der durch die Auswerteeinheit bestimmten Pose. Typischerweise wird zur kontaktanalogen Anzeige weiterhin die Position des Objektes benötigt, für das eine kontaktanaloge Darstellung angezeigt werden soll. Diese Objektposition kann von anderen Erkennungssystemen bereitgestellt werden, oder (im Fall von Objekten im Fahrzeuginnenraum beispielsweise) bekannt sein.

In einem weiteren Aspekt umfasst ein Fahrzeug eine der oben dargestellten Auswerteeinheit und die zweite Anzeige. Die zweite Anzeige ist typischerweise in LCD-, OLED- oder sonstige Anzeige und kann auch die Funktionalität eines Touch-Screens umfassen.

In einem anderen Aspekt umfasst ein Verfahren zum Bestimmen der Pose einer Datenbrille die folgenden Schritte: Empfangen von Aufnahmen einer Kamera der Datenbrille, die eine erste Anzeige umfasst; Erkennen eines vordefinierten Konfigurationsbildes in einer oder mehreren der Aufnahmen, wobei das Konfigurationsbild von einer zweiten Anzeige angezeigt wird; Bestimmen der Pose der Datenbrille mithilfe des erkannten Konfigurationsbildes. Das Verfahren kann durch die Schritte, zu deren Ausführung die oben genannte Auswerteeinheit eingerichtet ist, erweitert werden.

### KURZE BESCHREIBUNG DER ZEICHNUNGEN

Fig. 1 zeigt schematisch eine Datenbrille gemäß einem Ausführungsbeispiel.
Fig. 2 zeigt schematisch eine Vorrichtung gemäß einem Ausführungsbeispiel.

Gleiche Bezugszeichen beziehen sich auf sich entsprechende Elemente über die Figuren hinweg.

### DETAILLIERTE BESCHREIBUNG DER AUSFÜHRUNGSBEISPIELE

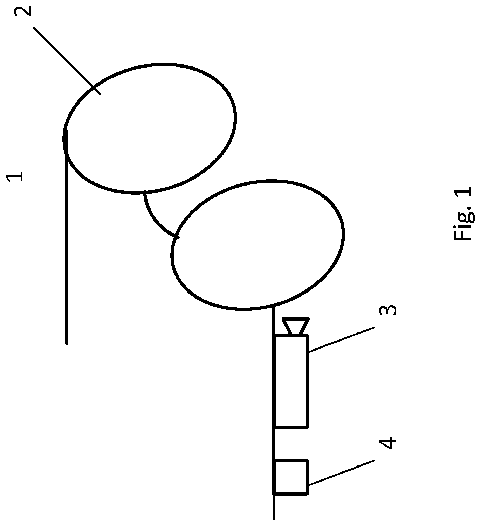

Fig. 1 zeigt schematisch eine Datenbrille 1 gemäß einem Ausführungsbeispiel. Die Datenbrille 1 umfasst zwei Teilanzeigen 2, je eine für das linke und das rechte Auge. Des Weiteren umfasst die Datenbrille 1 eine Kamera 3 und eine Auswerteeinheit 4. Nicht in Fig. 1 dargestellt, aber von der Datenbrille 1 umfasst ist ein Akkumulator und ein Wi-Fi Modul zur drahtlosen Funkübertragung. Die Datenbrille wird wie eine typische Sehhilfe auf dem Kopf getragen, wobei die Datenbrille auf der Nase und den Ohren aufliegt. Die Kamera 3 ist in Blickrichtung des Trägers (nicht gezeigt) der Datenbrille 1 ausgerichtet und nimmt im Wesentlichen das Blickfeld des Trägers der Datenbrille 1 auf. Die Kamera 3 macht fortlaufend Aufnahmen, also beispielsweise alle 16 ms, im sichtbaren Bereich des Lichts. Zusätzlich nimmt die Kamera 3 auch im Infrarotlichtbereich auf. Bei einem Einsatz im Fahrzeug, bei dem der Fahrer und der Innenraum des Fahrzeugs bei Nacht mit Infrarotlicht beleuchtet werden, kann somit auch bei Nacht die Funktion des Systems gewährleistet werden.

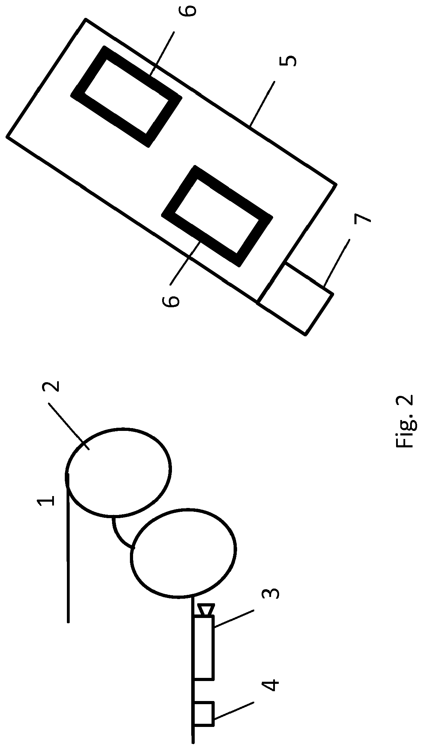

Fig. 2 zeigt schematisch eine Vorrichtung gemäß einem Ausführungsbeispiel. Die Vorrichtung umfasst die Datenbrille 1 gemäß Fig. 1 und eine OLED-Anzeige 5 ("zweite Anzeige"), die im Armaturenbrett eines Fahrzeugs (nicht gezeigt) verbaut ist. Die Anzeige 5 wird von einer Ansteuereinheit 7 mit Befehlen beaufschlagt. Die Anzeige 5 dient im Fahrzeug zunächst dazu, als Anzeige im Rahmen eines Anzeige-Bedien-Konzeptes Menüstrukturen, Auswahlen und graphische Elemente für den Fahrer des Fahrzeugs anzuzeigen. Dazu weist wird die Anzeige 5 mit einer Rate von 50Hz mit jeweils anzuzeigenden Bildern angesteuert. In unregelmäßigen Zeitabständen von ca. 1 s (also nach 0,8s; 1,2s; 1s; ...) wird für ein anzuzeigendes Bild das Konfigurationsbild von der Ansteuereinheit 7 an die Anzeige 5 weitergeleitet. Die Anzeige 5 zeigt dann das Konfigurationsbild für 20 ms an. In technischen Weiterbildungen können auch Anzeigen mit Bildraten von 100 Hz verwendet werden und ein Konfigurationsbild für nur 10 ms angezeigt werden. In Fig. 2 zeigt schematisch den Moment, in dem von der Anzeige 5 ein Konfigurationsbild dargestellt wird. Das Konfigurationsbild umfasst zwei klar begrenzte und zum weißen Hintergrund stark kontrastierte Rechtecke 6. Mithilfe dieses Musters kann die Pose der Datenbrille in der nachfolgenden Verarbeitung genau bestimmt werden. Die Ansteuereinheit 7 übermittelt der Auswerteeinheit 4 per Wi-Fi die Zeitpunkte, wann das Konfigurationsbild angezeigt wird. Basierend auf diesen empfangenen Zeitpunkten untersucht die Auswerteeinheit 4 den von der Kamera 3 empfangenen Bildstrom, um das Konfigurationsbild 6 zu erkennen und darauf basierend die Pose der Datenbrille in Relation zur Anzeige 5 zu bestimmen.

Die Pose wird von der Datenbrille 1 zu einer Recheneinheit des Fahrzeugs (nicht dargestellt) übertragen, der auch die Position eines zu markierenden Objekts im Umfeld des Fahrzeugs bekannt ist. Die Recheneinheit des Fahrzeugs ermittelt den Ort auf der Anzeige 2 der Datenbrille 2, an dem eine kontaktanaloge Darstellung anzuzeigen ist und übermittelt die Darstellung und den Anzeigeort an die Datenbrille 1. Diese zeigt die Darstellung am übermittelten Ort an, wodurch die Darstellung für den Träger der Datenbrille auf kontaktanaloge Art erscheint.

Die Ansteuereinheit 7 ist so konfiguriert, dass das Konfigurationsbild 6 nicht unmittelbar nach Bedieneingaben eines Benutzers angezeigt wird. So kann beispielsweise nach einer Eingabe für 0,6s auf die Anzeige des Konfigurationsbildes verzichtet werden. Es ist davon auszugehen, dass der Benutzer direkt nach einer Eingabe die Anzeige 5 intensiv betrachtet. In dieser Situation könnte die Darstellung des Konfigurationsbildes 6 dem Benutzer auffallen und wird deshalb vorteilhafterweise vermieden. Des Weiteren könnte auf die Anzeige des Konfigurationsbildes 6 immer dann verzichtet werden, wenn Bildänderungen für das Anzeige-Bedien-Konzept stattfinden, also beispielsweise beim Scrollen oder Wechseln in eine andere Funktion des Fahrzeugs (Navigation zu Radio, Medienstücke zu Einstellungen, etc.).

## Patentansprüche

1. Auswerteeinheit zur Bestimmung der Pose einer Datenbrille (1), wobei die Datenbrille eine erste Anzeige (2) und eine Kamera (3) umfasst; wobei die Auswerteeinheit (4) eingerichtet ist zum:
Empfangen von Aufnahmen der Kamera (3) der Datenbrille (1);
Erkennen eines vordefinierten Konfigurationsbildes (6) in einer oder mehreren der Aufnahmen, wobei das Konfigurationsbild (6) von einer zweiten Anzeige (5) angezeigt wird, wobei die zweite Anzeige ansonsten dazu dient, für Menschen wahrnehmbare text- oder grafikbasierte Informationen anzuzeigen;
Bestimmen der Pose der Datenbrille (1) mithilfe des erkannten Konfigurationsbildes (6);
**dadurch gekennzeichnet, dass** die zweite Anzeige (5) derart angesteuert wird, dass sie das Konfigurationsbild (6) für einen ausreichend kurzen Zeitraum anzeigt, so dass das Konfigurationsbild (6) für einen Menschen nicht wahrnehmbar ist, insbesondere für einen Zeitraum kleiner als 20 ms.

2. Auswerteeinheit nach einem der vorhergehenden Ansprüche, wobei die zweite Anzeige (5) derart angesteuert wird, dass sie das Konfigurationsbild (6) mehrfach nacheinander anzeigt, wobei sowohl die Gesamtheit der angezeigten Konfigurationsbilder (6) als auch die Anzeige jedes einzelnen des Konfigurationsbildes (6) für einen Menschen nicht wahrnehmbar ist.

3. Auswerteeinheit nach einem der vorhergehenden Ansprüche, die ferner eingerichtet ist zum:
Empfangen eines Hinweises, wann das Konfigurationsbild (6) auf der zweiten Anzeige (5) angezeigt wird.

4. Auswerteeinheit nach einem der vorhergehenden Ansprüche, wobei das Konfigurationsbild (6) nur dann auf der zweiten Anzeige (5) angezeigt wird, wenn mit einem Blickrichtungserfassungssystem festgestellt wird, dass der Träger der Datenbrille (1) nicht auf die zweite Anzeige (5) blickt.

5. Vorrichtung zum kontaktanalogen Anzeigen von Darstellungen, umfassend:
eine Datenbrille (1) mit einer ersten Anzeige (2) und einer Kamera (3);
Eine Auswerteeinheit nach einem der vorhergehenden Ansprüche;
Wobei die Vorrichtung ferner eingerichtet ist zum:
Anzeigen einer Darstellung auf kontaktanaloge Weise unter Verwendung der durch die Auswerteeinheit (4) bestimmten Pose.

6. Fahrzeug, umfassend eine Auswerteeinheit nach einem der Ansprüche 1 bis 4 und die in den vorhergehenden Ansprüchen genannte zweite Anzeige.

7. Verfahren zum Bestimmen der Pose einer Datenbrille (1), wobei das Verfahren die folgenden Schritte umfasst:
Empfangen von Aufnahmen einer Kamera (3) der Datenbrille (1), die eine erste Anzeige (2) umfasst;
Erkennen eines vordefinierten Konfigurationsbildes (6) in den Aufnahmen, wobei das Konfigurationsbild (6) von einer zweiten Anzeige (5) angezeigt wird, wobei die zweite Anzeige ansonsten dazu dient, für Menschen wahrnehmbare text- oder grafikbasierte Informationen anzuzeigen;
Bestimmen der Pose der Datenbrille (1) mithilfe des erkannten Konfigurationsbildes (6);
**dadurch gekennzeichnet, dass** die zweite Anzeige (5) derart angesteuert wird, dass sie das Konfigurationsbild (6) für einen ausreichend kurzen Zeitraum anzeigt, so dass das Konfigurationsbild (6) für einen Menschen nicht wahrnehmbar ist, insbesondere für einen Zeitraum kleiner als 20 ms.

## Claims

1. An evaluation unit for determining the position of smartglasses (1), wherein the smartglasses comprise a first display (2) and a camera (3), wherein the evaluation unit (4) is designed to:
receive images recorded by the camera (3) of the smartglasses (1);
identify a predefined configuration image (6) in one or more of the recorded images, wherein the configuration image (6) is displayed by a second display (5), wherein the second display is otherwise used to display text-based or graphic-based information perceptible by humans;
determine the position of the smartglasses (1) with the aid of the identified configuration image (6);
**characterised in that** the second display (5)
is controlled in such a way that it displays the configuration image (6) for a sufficiently short period of time so that the configuration image (6) is not perceptible by humans, more especially for a period of time shorter than 20 ms.

2. An evaluation unit according to the preceding claim, wherein the second display (5) is controlled in such a way that it displays the configuration image (6) a number of times in succession, wherein neither the totality of displayed configuration images (6) nor the display of each individual configuration image (6) is perceptible by humans.

3. An evaluation unit according to any one of the preceding claims, further designed to:
receive a notification when the configuration image (6) is displayed on the second display (5).

4. An evaluation unit according to any one of the preceding claims, wherein the configuration image (6) is displayed on the second display (5) only if it is determined by means of a viewing direction detection system that the wearer of the smartglasses (1) is not looking at the second display (5).

5. A device for the contact-analogue display of presentations, comprising:
smartglasses (1) having a first display (2) and a camera (3);
an evaluation unit according to any one of the preceding claims;
wherein the device is also designed to:
display a presentation in a contact-analogue manner with use of the position determined by the evaluation unit (4).

6. A vehicle, comprising an evaluation unit according to any one of claims 1 to 4 and the second display described in the preceding claims.

7. A method for determining the position of smartglasses (1), wherein the method comprises the following steps:
receiving images recorded by a camera (3) of the smartglasses (1), which comprises a first display (2);
identifying a predefined configuration image (6) in the recorded images, wherein the configuration image (6) is displayed by a second display (5), wherein the second display is otherwise used to display text-based or graphic-based information perceptible by humans;
determining the position of the smartglasses (1) with the aid of the identified configuration image (6);
**characterised in that** the second display (5) is controlled in such a way that it displays the configuration image (6) for a sufficiently short period of time so that the configuration image (6) is not perceptible by humans, more especially for a period of time shorter than 20 ms.

## Revendications

1. Unité d'évaluation permettant de déterminer le positionnement de lunettes intelligentes (1), ces lunettes intelligentes comprenant un premier affichage (2) et une caméra (3), l'unité d'évaluation (4) étant réalisée pour permettre :
de recevoir des prises de la caméra (3) des lunettes intelligentes (1),
d'identifier une image de configuration (6) prédéfinie dans une ou plusieurs des prise(s), l'image de configuration (6) étant affichée par un second affichage (5), le second affichage (5) servant sinon à afficher des informations textuelles ou graphiques perceptibles par des hommes,
de déterminer le positionnement des lunettes intelligentes (1) à l'aide de l'image de configuration (6) identifiée,
**caractérisée en ce que**
le second affichage (5) est commandé de sorte qu'il affiche l'image de configuration (6) pendant une durée suffisamment courte pour que l'image de configuration (6) ne soit pas perceptible par un homme, en particulier pendant une durée inférieure à 20ms.

2. Unité d'évaluation conforme à l'une des revendications précédentes, dans laquelle le second affichage (5) est commandé de façon à afficher successivement l'image de configuration (6) plusieurs fois, et la totalité des images de configuration (6) affichées ainsi que l'affichage de chacune des images de configuration individuelles (6) ne sont pas perceptibles par un homme.

3. Unité d'évaluation conforme à l'une des revendications précédentes, en outre réalisée pour :
recevoir une indication lorsque l'image de configuration (6) est affichée sur le second affichage (5).

4. Unité d'évaluation conforme à l'une des revendications précédentes, dans laquelle l'image de configuration (6) n'est affichée sur le second affichage (5) que lorsque il est déterminé, avec un système de détection de la direction du regard que le porteur des lunettes intelligentes (1) ne regarde pas le second affichage (5).

5. Dispositif permettant l'affichage de représentations par analogie de contact, comprenant :
des lunettes intelligentes (1) comportant un premier affichage (2) et une caméra (3),
une unité d'évaluation conforme à l'une des revendications précédentes, le dispositif étant réalisé pour permettre :
d'afficher une représentation par analogie de contact en utilisant le positionnement déterminé par l'unité d'évaluation (4).

6. Véhicule comprenant une unité d'évaluation conforme à l'une des revendications 1 à 4,
et un second affichage conforme aux revendications précédentes.

7. Procédé de détermination de la position de lunettes intelligentes (1), ce procédé comprenant les étapes suivantes consistant à :
recevoir des prises d'une caméra (3) des lunettes intelligentes (1) qui comportent un premier affichage (2),
identifier une image de configuration (6) prédéfinie dans les prises, l'image de configuration (6) étant affichée par un second affichage (5) et le second affichage (5) servant sinon à afficher des informations textuelles ou graphiques perceptibles par des hommes,
déterminer le positionnement des lunettes intelligentes (1) à l'aide de l'image de configuration (6) identifiée,
**caractérisé en ce que**
le second affichage (5) est commandé de sorte qu'il affiche l'image de configuration (6) pendant une durée suffisamment courte pour qu'elle ne soit pas perceptible pour un homme, en particulier pendant une durée inférieure à 20ms.
